# EUROPEAN PATENT APPLICATION

(11) **EP 1 118 808 A2**
(43) Date of publication of application: **25.07.2001**
(21) Application number: 00128200.3
(22) Date of filing: 21.12.2000
(51) Int. Cl.: F16L 11/11, F16L 11/118, B32B 1/08, B32B 1/10, B32B 31/00

(54) **Corrugated laminated fuel tube and a process for manufacturing the same**

(30) Priority: 27.12.1999 JP 36864699
(71) Applicant: Tokai Rubber Industries, Ltd., Komaki-shi, Aichi-ken, 485-8550 (JP)
(72) Inventor: Ito, Hiroaki, Kasugai-shi, Aichi-ken, 487-0035 (JP); Iio, Shinji, Inazawa-shi, Aichi-ken, 492-8017 (JP); Ito, Tomohide, Kasugai-shi, Aichi-ken, 486-0923 (JP); Ishida, Yoshimitsu, Komaki-shi, Aichi-ken, 485-8550 (JP)
(74) Representative: Kuhnen & Wacker

(57) **Abstract**

A corrugated fuel tube is manufactured by extruding an inner single layer or multilayer of a resin of high fuel impermeability, extruding an outer single layer or multilayer of a thermoplastic resin so as to cover the inner layer to form a tube having a multi-layered wall, and corrugating the tube along at least a part thereof. The surface treatment is preferably given to an outer peripheral surface of the inner layer to ensure an improved adhesion between the inner and outer layers. The tube can be made without presenting any problem caused by a difference in melt viscosity between the materials forming its inner and outer layers.

## Description

### BACKGROUND OF THE INVENTION

### 1. Field of the Invention:

This invention relates to a process for manufacturing a corrugated fuel tube. More particularly, it is a process for manufacturing a corrugated fuel tube having a wall composed of an inner single layer or multilayer of a resin having a high level of fuel impermeability and an outer single layer or multilayer of a thermoplastic resin, the wall being at least partly corrugated.

### 2. Description of the Related Art:

The regulations as to evaporation of fuel from motor vehicles are becoming increasingly strict in view of environmental problems in the United States, European countries and Japan. There has been an increasing demand for improved fuel tubes, since the evaporation of fuel from motor vehicles depends largely upon the quality of fuel tubes. Thus, there have been proposed fuel tubes having an inner layer of a resin which is highly impermeable to a hydrocarbon fuel (e.g. a fluororesin). For example, Japanese Patent Application Laid-Open No. 164273/1993, 173446/1995 or 311461/1998 discloses a fuel tube having a wall formed by an inner layer of an ethylene-tetrafluoroethylene copolymer (ETFE), which is a fluororesin, and an outer layer of a polyamide, or other thermoplastic resin. United States Patent No. 5,884,671 or 5,884,672 discloses a fuel tube having a three-layered wall including an inner layer of ETFE. United States Patent No. 5,566,720 discloses a fuel tube having a two- or three-layered wall formed from a material including a tetrafluoroethylene-hexafluoropropylene-vinylidene fluoride terpolymer (THV).

There is also known a corrugated fuel tube having a wall made flexible by its corrugation along at least a part of its length. This kind of tube is desirable in view of freedom in designing a piping layout and working efficiency in a piping process. United States Patents Nos. 5,284,184, 5,460,771 and 5,469,892 disclose, for example, a corrugated fuel tube having a multi-layered wall including an inner layer of a fluororesin having a high level of fuel impermeability and an outer layer of a polyamide, or other thermoplastic resin, and a process for manufacturing the same.

It has been usual to make a corrugated fuel tube having a multi-layered wall by corrugating a tube formed by co-extrusion. Layers of molten resins are extruded together through a single die in a co-extrusion head connected to a multilayer extruder to form a tube, and the tube is at least partly corrugated in a corrugating machine.

It was, however, found that a number of problems occur if the process as described above is employed for making a corrugated tube having a multi-layered wall including a layer of e.g. a fluororesin and a layer of e.g. a polyamide resin.

There is usually a great difference in melt viscosity between e.g. a fluoro or polyester resin suitable as a material for the inner layer of a multi-layered tube wall and a polyamide or polyolefin resin suitable as a material for its outer layer. The difference is often over 10 times as measured in Pa·s (Sl unit). The molten resins often form a tubular wall having a thickness lacking uniformity around its circumference. The lack of uniformity is due to, for example, the formation of cylindrical layers which are eccentric to each other, or a wall which is partly or wholly corrugated, or otherwise irregularly uneven.

The lack of uniformity in a wall thickness causes a decrease of burst pressure, or cracks from nonuniform portions. Further, fuel impermeability is reduced due to wall portions having a small thickness, and the inner and outer layers of its wall fail to adhere closely to each other due to difference in wall thickness.

Another problem is due to a long die which is usually employed for conveying the tube as extruded to the corrugating machine. An excessive drop in molten resin temperature is likely to occur during the passage of the tube along the die and cause it to have a melt fracture in its inner peripheral surface. No such melt fracture is desirable for any reliably sealed tube joint. The molten resin temperature can be kept high by appropriate control on the die temperature, but the higher temperature undesirably brings about a greater difference in viscosity between the molten resins and thereby a more serious lack of uniformity in wall thickness.

### SUMMARY OF THE INVENTION

It is, therefore, an object of this invention to provide an improved process which can make a corrugated tube having a multi-layered wall including an inner layer of a resin having a high level of fuel impermeability and an outer layer of a thermoplastic resin without presenting the problems as pointed out above.

It has been found that crosshead extrusion, which is usually considered less suitable than co-extrusion as a method of making a corrugated tube having a multi-layered wall, is more suitable when the problem of melt viscosity exists as pointed out above. Crosshead extrusion is a method in which an outer layer is extruded to cover a solidified inner layer.

According to a first aspect of this invention, therefore, there is provided a process for manufacturing a corrugated fuel tube which comprises the steps of:
(1) extruding an inner single layer or multilayer of a resin having a high fuel impermeability;
(2) extruding an outer single layer or multilayer of a thermoplastic resin to cover the inner single layer or multilayer as solidified, so as to form a multi-layered tube; and
(3) corrugating the tube along at least a part of its length.

The process can make a tube having a multi-layered wall of uniform thickness without being undesirably affected by any difference in melt viscosity between the resins forming its inner and outer layers, since the outer layer is extruded to cover the inner layer after the solidification of the latter.

When the tube as extruded is conveyed to a corrugating machine by a long die, its inner layer can be kept under the optimum conditions by the control of the die temperature, so that it is possible to avoid any lack of uniformity in wall thickness of the tube and prevent any melt fracture occurring in its inner peripheral surface and any defective adhesion between its inner and outer layers.

If it is likely that the extrusion of the outer layer about the solidified inner layer may result in their unsatisfactory adhesion, any such likelihood can be overcome by, for example, the adequate treatment of the outer peripheral surface of the inner layer, or the adequate chemical modification of the material forming the inner or outer layer, or both of the layers.

According to a second aspect of this invention, therefore, the treatment for improved adhesion is given to the outer peripheral surface of the inner layer as extruded. This treatment ensures satisfactory adhesion between the inner and outer layers.

According to a third aspect of this invention, the treatment given to the inner layer is preferably its plasma treatment, and ensures further satisfactory adhesion between the inner and outer layers.

According to a fourth aspect of this invention, the treatment given to the inner layer more preferably consists of the plasma treatment and the subsequent coating with a solution of a silane coupling agent, and ensures further satisfactory adhesion between the inner and outer layers.

According to a fifth aspect of this invention, the resin for the inner layer is a fluororesin, a polyester, polyketone, ethylene-vinyl alcohol, polyacetal, or polyphenylene sulfide resin, or a modified product thereof, and the resin for the outer layer is a polyamide or polyolefin resin, or a modified product thereof.

These resins provide a variety of preferred combinations of materials for the inner and outer layers. If any of such combinations is employed, this invention is of particularly high utility insofar as it has been found that the problems resulting from the difference in melt viscosity as pointed out before are particularly serious when any such combination is employed.

According to a sixth aspect of this invention, the resin forming the inner layer if it is a single layer, or its radially innermost layer if it is a multilayer, contains an electrically conductive material and has a resistance not exceeding 10¹⁰ Ω·cm.

The inner layer can effectively be prevented from being electrically charged, so that sparking can effectively be prevented when the tube, for example, a filler neck hose, is supplied with fuel.

Although it is generally true that the addition of an electrically conductive material raises the melt viscosity of the resin for the inner layer to a still higher level, its melt viscosity is hardly of importance to this invention, as stated before.

According to a seventh aspect of this invention, the resin forming the inner layer, or its radially outermost layer if it is a multilayer, contains a functional group which is reactive with the thermoplastic resin of the outer layer. A chemical bond is formed between the inner and outer layers to strengthen their adhesion effectively.

According to an eighth aspect of this invention, the resin forming the outer layer if it is a single layer, or its radially innermost layer if it is a multilayer, is a polyamide containing at least 4 × 10⁻⁵ gram-equivalent of amino groups per gram. A stronger adhesion can be obtained between the inner and outer layers, particularly if the material of the inner layer contains a functional group which is reactive with the polyamide.

As this invention is hardly affected by the molten properties of the resins, the amount of the amino groups in the polyamide can be increased by employing any of various known methods in which its average molecular weight is maintained, or lowered.

According to a ninth aspect of this invention, there is provided an improved corrugated fuel tube manufactured by the process according to any of the first to eighth aspects of this invention as set forth above. The tube has the features and advantages as stated in the foregoing description of the process according to this invention.

The above and other objects, features and advantages of this invention will become more apparent from the following description.

### DETAILED DESCRIPTION OF THE INVENTION

The process of this invention can be employed for manufacturing a corrugated fuel tube having a wall formed by an inner single layer or multilayer of a resin having a high level of fuel impermeability and an outer single layer or multilayer of a thermoplastic resin, and corrugated along at least a part of its length. It is particularly suitable when the inner and outer layers of its wall include at least a pair of layers whose resin materials have a ratio of over 10 : 1 in melt viscosity as measured in Pa·s, that is, when any one material has melt viscosity over 10 times that of another material.

A corrugated tube is a tube obtained by corrugating the wall of a smooth tube (straight or curved) along a part, or the greater part of its length. A specific example can be obtained by corrugating a smooth tube having an inside diameter of 3 to 60 mm and a wall thickness of 0.4 to 3.0 mm along a part of its length. The corrugated tube of this invention can be used for any purpose of conveying fuel. More specifically, it can be used as, for example, a fuel filler, breather or evaporation hose, or a hose for a fuel feed or return circuit in a motor vehicle.

According to the process of this invention, the outer layer of the wall of a tube is not extruded with its inner layer, but is extruded to cover its inner layer after the latter has been solidified. If the inner or outer layer is a multilayer consisting of a plurality of layers, however, those layers can be extruded together. Any known or ordinary extruder can be employed for carrying out the process of this invention.

"Covering extrusion", or crosshead extrusion method, refers to the process where the outer layer is extruded about the solidified inner layer coaxially therewith. The degree of solidification of the inner layer is, however, not critical, since the separate steps of extruding the inner and outer layers in the covering extrusion leads to an appropriate solidification of the inner layer.

The inner layer as extruded preferably has its outer peripheral surface treated for improved adhesion before the outer layer is extruded about it. Its surface treatment may, for example, be its plasma treatment using hydrogen, nitrogen, argon or helium gas at a reduced pressure, or using helium gas at an atmospheric pressure, or its corona discharge, ultraviolet radiation or flame treatment. Its surface treatment may be followed by its coating with a solution of a silane coupling agent, or any other adhesive. Its surface treatment, or coating is effective for ensuring its close adhesion to the outer layer during the corrugation of the tube, or during the use of the corrugated tube.

Any known or ordinary machine can be employed for corrugating at least a part of the tube formed by the covering extrusion of its outer wall layer about its inner wall layer. Any appropriate method can be employed for corrugation. Examples of appropriate methods include: forming a corrugated tube on a corrugating surface of a die by applying negative pressure to the tube within the die; creating an elevated pressure in the tube; or a combination thereof.

### (Corrugated Fuel Tube)

The corrugated fuel tube according to this invention has a multi-layered wall formed by an inner single layer or multilayer of a resin having a high level of fuel impermeability, such as a fluororesin, and an outer single layer or multilayer of a thermoplastic resin.

The materials forming the inner and outer layers of its wall are not specifically limited in melt viscosity, though it is when they include any two materials having a ratio of over 10 : 1 in melt viscosity as measured in Pa·s that this invention is of particularly high utility.

The outer layer may or may not be surrounded by another layer, such as a protective layer formed from an adequate resin, thermoplastic elastomer, or rubber.

### (Inner Layer)

The resin forming the inner layer may be of any kind if it has a high level of fuel impermeability. Preferred examples include fluororesin polyester resin, polyketone resin, ethylene-vinyl alcohol resin, polyacetal resin, polyphenylene sulfide resin, and a modified product thereof, and particularly a fluororesin is preferred among others.

Preferred examples of the fluororesins include an ethylene-tetrafluoroethylene copolymer (ETFE), a tetrafluoroethylenehexafluoropropylene-vinylidene fluoride terpolymer (THV), an ethylenetetrafluoroethylene-vinylidene fluoride terpolymer, an ethylenetetrafluoroethylene-propylene terpolymer, a tetrafluoroethylene-vinylidene fluoride-propylene terpolymer, polyvinylidene fluoride, polychlorotrifluoroethylene, a vinylidene fluoride-chlorotrifluoroethylene copolymer, a tetrafluoroethylene-hexafluoropropylene copolymer, a tetrafluoroethylene-perfluoro (alkylvinyl ether) copolymer, a tetrafluoroethylene-vinylidene fluoride copolymer and a hexafluoropropylene-vinylidene fluoride copolymer.

ETFE and THV are, among others, preferred because of their high fuel impermeability and flexibility. A preferred form of ETFE can be obtained by copolymerizing ethylene and tetrafluoroethylene in a molar ratio of 70 and 30 to 30 and 70. A copolymer thereof with one or more of fluoroolefin, vinylidene fluoride and propylene is still more preferable.

Preferred polyester resins include polybutylene terephthalate, polybutylene naphthalate and a copolymer thereof.

The inner layer may be a single layer, or a multilayer consisting of two or more layers formed from different kinds of resins, or formed from the same resin, but containing different additives.

The material forming the inner layer if it is a single layer, or its radially innermost layer if it is a multilayer, preferably contains an electrically conductive material, such as carbon black, carbon nanotube or a metal powder, so that the inner layer may have a good conductivity having a resistivity not exceeding 1 × 10¹⁰ Ω·cm.

The material forming the inner layer if it is a single layer, or its radially outermost layer if it is a multilayer, preferably contains one or more kinds of functional groups which are reactive with the thermoplastic resin of the outer layer. Examples of the functional groups are carboxyl, carboxylic (e.g. maleic, phthalic, itaconic, citraconic or glutaconic) anhydride, epoxy, hydroxyl, isocyanate, aldehyde, ester, acid amide, amino, hydrolyzable silyl, and cyano groups. Carboxyl, carboxylic anhydride, epoxy and hydroxyl groups are, among others, preferred because of their high reactivity with amino groups if the outer layer is of a polyamide resin.

Various methods can be employed for preparing such a resin containing a reactive functional group. According to a preferred method, a monomer containing a reactive functional group is copolymerized with a resin monomer. Examples of the monomers containing reactive functional groups are unsaturated monocarboxylic acids such as acrylic, methacrylic, vinylacetic, pentenoic, hexenoic, octanoic, decenoic, dodecenoic and oleic acids, unsaturated dicarboxylic acids such as fumaric, itaconic, citraconic and glutaconic acids, unsaturated alcohols such as allyl alcohol, butenol, pentenol, hexenol and dodecenol, and unsaturated compounds containing epoxy groups, such as glycidyl methacrylate, glycidyl acrylate and acrylglycidyl ether. The compounds include those containing fluorine substituted for hydrogen bonded to carbon. According to another preferred method, a compound containing a reactive functional group is grafted to a resin, such as a fluororesin, after its polymerization. It is a compound containing a graft bonding group (e.g. an unsaturated bond) with a functional group. It can be grafted to the resin by a radical reaction using peroxide, etc.

The reactive functional group ensures the close adhesion of the inner and outer layers during the corrugation of the tube, or during the actual use of the corrugated tube.

### (Outer Layer)

Although any thermoplastic resin can be used to form the outer layer, a polyamide, polyethylene or polypropylene resin, an ethylenepropylene copolymer, or a thermoplastic olefinic elastomer is preferred for weatherability, abrasion resistance and oil resistance. A polyamide selected from among PA11, PA12, a PA6/12 copolymer, PA612 and olefin-modified PA6 is, among others, preferred for its resistance to an antifreezing agent. The outer layer may further contain not more than, say, 30% by weight of a plasticizer as required for its flexibility, an antioxidant, a processing aid, etc. A fluororesin is also available as a thermoplastic resin, but no special benefit can be expected from its use.

The outer layer may be a single layer, or a multilayer consisting of two or more layers of different kinds of thermoplastic resins. It may alternatively consist of two or more layers formed from the same resin, but containing different additives. It may also consist of two or more layers formed from the same polyamide, but containing different amounts of amino groups.

If a polyamide is used to form the outer layer, or its radially innermost layer if it is a multilayer, it preferably contains a larger amount of amino groups than normal. The amino groups ensure an improved adhesion of the outer layer to the inner layer when the inner layer material contains a reactive functional group as stated before. The polyamide may contain, say, at least 4 × 10⁻⁵ gram-equivalent of amino groups per gram. The presence of such a large amount of amino groups ensures the close adhesion of the inner and outer layers during the corrugation of the tube. The amino groups also ensure an improved fit of a tube end to a connector, and also the close adhesion of the inner and outer layers during the use of the tube.

A polyamide may have a higher content of amino groups if its average molecular weight is lowered. It may also have a higher content of amino groups without having its average molecular weight changed, if, for example, a diamine, or a larger amount of diamine is added during polymerization. Examples of the diamines which can be employed are meta-xylylenediamine, paraxylylenediamine, hexamethylenediamine and dodecamethylenediamine. It is also effective to modify the carboxyl groups of the polyamide with amino groups, or mix a molten amino compound with the polyamide. Examples of the amino compounds which can be employed are aliphatic diamines or polyamines, γ-aminopropyltrimethoxysilane, N-β(aminoethyl)γ-aminopropylmethyldiethoxysilane and N-cyclohexyl-γ-aminopropyltrimethoxysilane.

It is also preferable to add e.g. an amino, carboxyl, carboxylic anhydride, methyl methacrylate, ethyl acrylate, glycidyl methacrylate or methyl acrylate group to the outer layer material of a single layer and a multilayer in an appropriate way if the outer layer, or its radially innermost portion is formed from polyethylene, polypropylene, an ethylenepropylene copolymer, or a thermoplastic olefinic elastomer.

### EXAMPLES

Corrugated fuel tubes embodying this invention were prepared, and are shown in Tables 1 and 2 as Examples 1 to 12 together with Comparative Example 1.

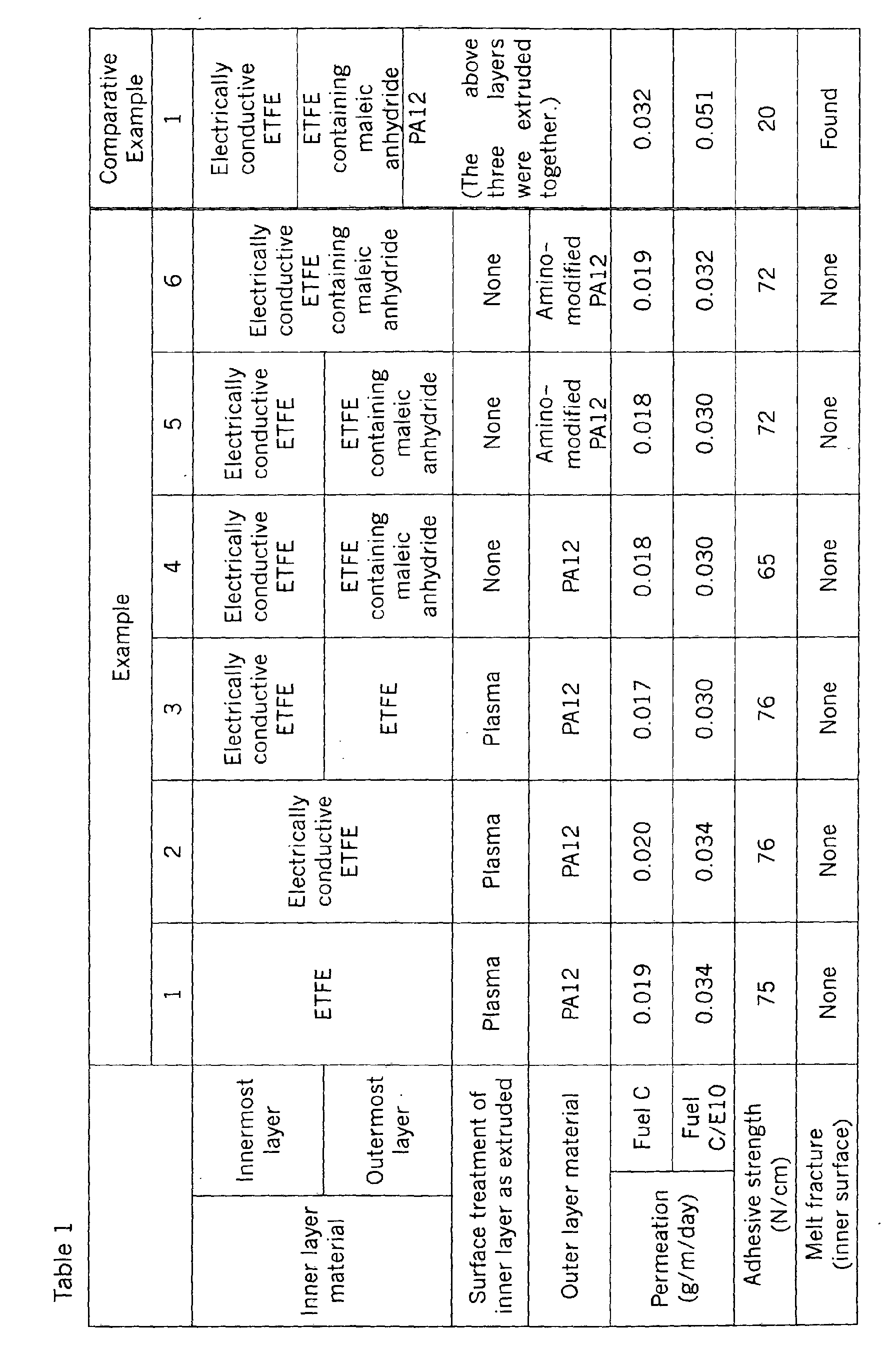

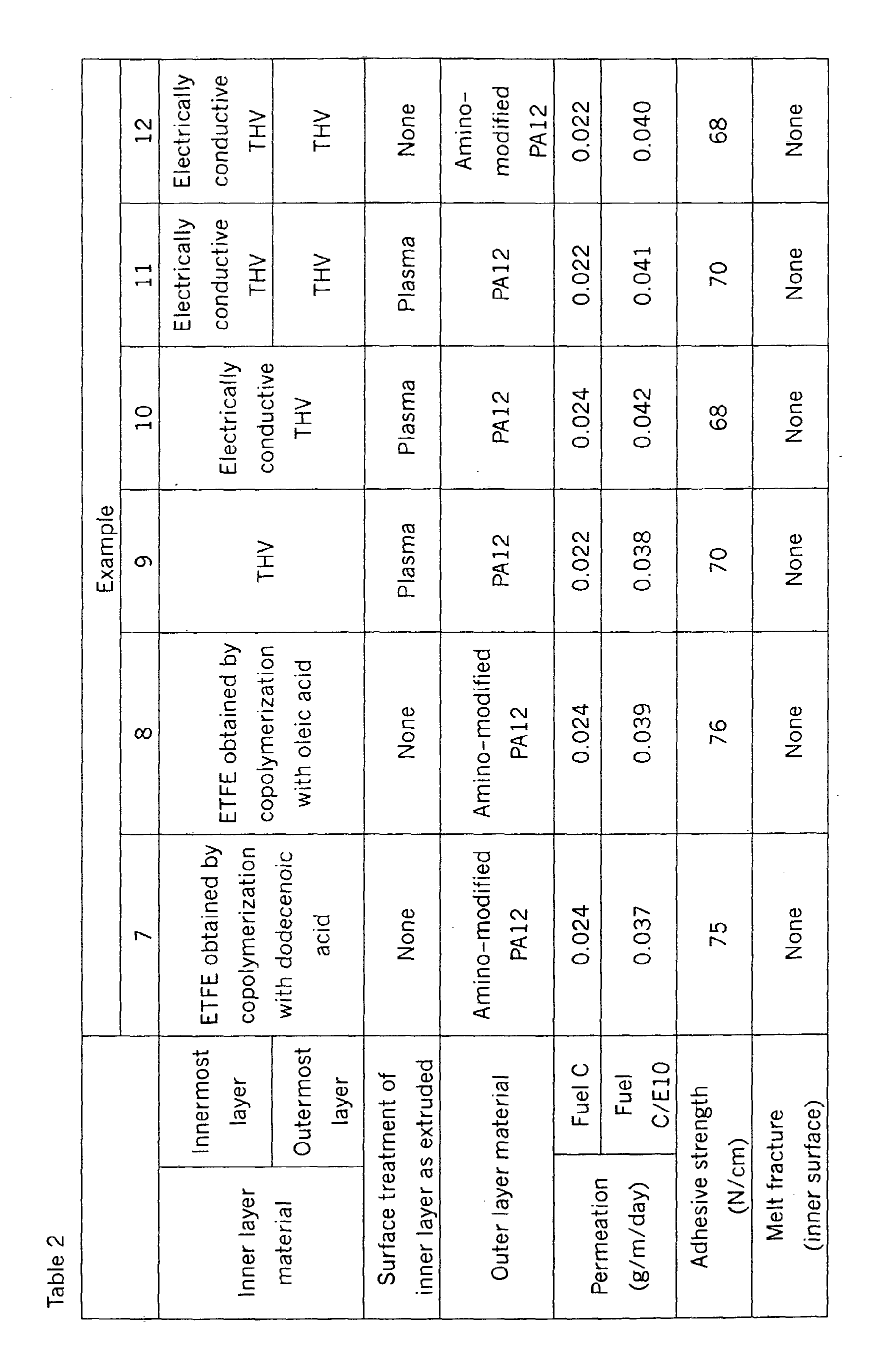

All of the tubes had their inner and outer wall layers formed from the materials shown in Table 1 or 2, and were corrugated along a part of their length. The following is a description of each example:

### [Example 1]

A tube of ETFE was extruded by an extruder for forming an inner layer, and had its outer peripheral surface treated with a plasma of argon gas at a reduced pressure. Then, a tube of PA12 was extruded by an extruder for forming an outer layer so as to cover the inner layer and thereby form a laminated tube. It was corrugated to make a partly corrugated tube having an inside diameter of 25 mm in its straight portion and a wall thickness of 1.2 mm consisting of an inner layer thickness of 0.3 mm and an outer layer thickness of 0.9 mm.

### [Example 2]

A corrugated tube was made by extruding a tube of electrically conductive ETFE having a resistivity of 3 × 10⁵ Ω·cm from an extruder for forming an inner layer, and otherwise repeating Example 1.

### [Example 3]

A corrugated tube was made by forming an inner multilayer by extruding its radially innermost layer of electrically conductive ETFE having a thickness of 0.1 mm and its radially outermost layer of ETFE having a thickness of 0.2 mm together, and otherwise repeating Example 1.

### [Example 4]

A corrugated tube was made by forming an inner multilayer by extruding its radially innermost layer of electrically conductive ETFE having a thickness of 0.1 mm and its radially outermost layer of ETFE containing maleic anhydride and having a thickness of 0.2 mm together, and otherwise repeating Example 1, but without plasma treatment of the inner layer.

### [Example 5]

A corrugated tube was made by forming an outer layer of amino-modified PA12 and otherwise repeating Example 4. The amino-modified PA12 was obtained by adding amine during the production of PA12 by polymerization, and contained 8 × 10⁻⁵ gram-equivalent of amino groups per gram.

### [Example 6]

A tube of electrically conductive ETFE containing maleic anhydride was extruded by an extruder for forming an inner layer. Then, a tube of amino-modified PA12 as defined above was extruded by an extruder for forming an outer layer so as to cover the inner layer and thereby form a laminated tube. Then, it was corrugated to make a partly corrugated tube having an inside diameter of 25 mm in its straight portion and a wall thickness of 1.2 mm consisting of an inner layer thickness of 0.3 mm and an outer layer thickness of 0.9 mm.

### [Example 7]

A tube of ETFE obtained by copolymerization with dodecenoic acid was extruded by an extruder for forming an inner layer. Then, a tube of amino-modified PA12 as defined above was extruded by an extruder for forming an outer layer so as to cover the inner layer and thereby form a laminated tube. Then, Example 1 was repeated to make a partly corrugated tube, but without plasma treatment.

### [Example 8]

A tube of ETFE obtained by copolymerization with oleic acid was extruded by an extruder for forming an inner layer. Then, a tube of amino-modified PA12 as defined before was extruded by an extruder for forming an outer layer so as to cover the inner layer and thereby form a laminated tube. Then, Example 1 was repeated to make a partly corrugated tube, but without plasma treatment.

### [Comparative'Example 1]

Three layers of electrically conductive ETFE, ETFE containing maleic anhydride and PA12, respectively, were extruded together through a co-extrusion head to form a tube having a three-layered wall including a radially innermost layer of electrically conductive ETFE. The tube was corrugated to make a partly corrugated tube having an inside diameter of 25 mm in its straight portion and a wall thickness of 1.2 mm consisting of an innermost layer thickness of 0.1 mm, a middle layer thickness of 0.2 mm and an outermost layer thickness of 0.9 mm.

### [Examples 9 to 12]

The tubes according to Examples 9, 10 and 11 were made by using THV instead of ETFE and otherwise repeating Examples 1, 2 and 3, respectively. The tube according to Example 12 was made by omitting the plasma treatment of the inner layer, using amino-modified PA12 instead of PA12, and otherwise repeating Example 11.

### [Evaluation]

Each tube was filled with Fuel C containing 50% by volume of isooctane and 50% by volume of toluene, a fuel for a fuel impermeability test conforming to JIS K 6258, and was left to stand at a temperature of 40°C for 168 hours. Then, the tube was emptied, and after it was filled with Fuel C again, it was weighed, was left to stand at a temperature of 40°C for 72 hours, and was weighed again. A difference of its weight was used for calculating the permeation of fuel in gram per meter of tube length per day. A different fuel impermeability test was conducted on each tube in the same way, but by using Fuel C/E 10, a mixture containing 90% by volume of Fuel C and 10% by volume of ethanol. The test results are shown in Table 1 or 2.

Each tube was axially cut into four equal wall segments. The straight portion of one of the segments was delaminated to separate the inner and outer wall layers, and the force as required for the delamination of 1 cm thereof was calculated as a measure of the adhesive strength (N/cm) between the inner and outer wall layers. The results are shown in Table 1 or 2.

The wall segments of each tube were visually inspected for any melt fracture in the inner peripheral surface of its straight portion. The results are shown in Table 1 or 2.

While the invention has been described by way of its preferred embodiments, it is to be understood that variations or modifications may be easily made by those skilled in the art without departing from the scope of this invention which is defined by the appended claims.

## Claims

1. A process for manufacturing a corrugated fuel tube comprising the steps of:
extruding an inner single layer or multilayer of a resin of high fuel impermeability;
extruding an outer single layer or multilayer of a thermoplastic resin so as to cover the inner layer as solidified to form a tube having a multi-layered wall; and
corrugating the tube along at least a part of its length.

2. A process as set forth in claim 1, further comprising the step of giving surface treatment to an outer peripheral surface of the inner layer to improve its adhesion to the outer layer.

3. A process as set forth in claim 2, wherein the surface treatment comprises plasma, corona discharge, ultraviolet radiation, or flame treatment.

4. A corrugated fuel tube manufactured by a process as set forth in claim 1.

5. A tube as set forth in claim 4, wherein the resin forming the inner layer is an ethylene-tetrafluoroethylene copolymer, or a tetrafluoroethylene-hexafluoropropylene-vinylidene fluoride terpolymer.

6. A tube as set forth in claim 4, wherein the resin forming the inner single layer or a radially innermost layer of the inner multilayer contains an electrically conductive material, and has a resistivity not exceeding 10¹⁰ Ω·cm.

7. A tube as set forth in claim 4, wherein the resin forming the inner single layer or a radially outermost layer of the inner multilayer contains a functional group which is reactive with the thermoplastic resin of the outer layer.

8. A tube as set forth in claim 4, wherein the thermoplastic resin is a polyamide or polyolefin resin, or a modified product thereof.

9. A tube as set forth in claim 4, wherein the resin forming the outer single layer or a radially innermost layer of the outer multilayer is a polyamide resin containing at least 4 × 10⁻⁵ gram-equivalent of amino groups per gram.

10. A tube as set forth in claim 4, which is adapted to be used as a fuel filler, breather or evaporation hose, or a hose for a fuel feed or return circuit in a motor vehicle.
